# EUROPEAN PATENT APPLICATION

(11) **EP 4 484 582 A1**
(43) Date of publication of application: **01.01.2025**
(21) Application number: 23780244.2
(22) Date of filing: 24.03.2023
(51) Int. Cl.: C21B 7/24, C21B 5/00

(54) **BLAST FURNACE ABNORMALITY DETERMINATION DEVICE, BLAST FURNACE ABNORMALITY DETERMINATION METHOD, BLAST FURNACE OPERATION METHOD, BLAST FURNACE OPERATION SYSTEM, BLAST FURNACE ABNORMALITY DETERMINATION SERVER DEVICE, PROGRAM FOR BLAST FURNACE ABNORMALITY DETERMINATION SERVER DEVICE, AND DISPLAY TERMINAL DEVICE**

(30) Priority: 29.03.2022 JP 2022052798
(71) Applicant: JFE Steel Corporation, Tokyo 100-0011 (JP)
(72) Inventor: SHIMAMOTO, Hiroyuki, Tokyo 100-0011 (JP); YAMAGUCHI, Tatsuya, Tokyo 100-0011 (JP); TSUJI, Masashi, Tokyo 100-0011 (JP)
(74) Representative: Hoffmann Eitle
(86) International application number: PCT/JP2023/011980
(87) International publication number: WO 2023/190234

(57) **Abstract**

A blast furnace abnormality determination device according to the present invention includes a sensor signal acquisition unit configured to acquire measurement data of a plurality of sensors installed at different positions of a blast furnace, an evaluation index calculation unit configured to calculate a unified evaluation index indicating a furnace condition state of the blast furnace from the measurement data acquired by the sensor signal acquisition unit, an evaluation index differential value calculation unit configured to calculate an evaluation index differential value that is an absolute value of a time difference of the evaluation index calculated by the evaluation index calculation unit, and a determination unit configured to determine an abnormality of the blast furnace based on the evaluation index differential value calculated by the evaluation index differential value calculation unit and output a result of the determination and data used for the determination.

## Description

### Field

The present invention relates to a blast furnace abnormality determination device, a blast furnace abnormality determination method, a blast furnace operation method, a blast furnace operation system, a blast furnace abnormality determination server device, a program for the blast furnace abnormality determination server device, and a display terminal device.

### Background

Various anomalies are likely to occur in a plant. It is important to find abnormalities early and take appropriate measures in order to prevent occurrence of serious abnormalities or troubles. For example, under the recent low coke ratio operation of a blast furnace, it is important to detect or estimate a furnace condition state of the blast furnace, particularly, a ventilation state of the blast furnace and a change in the ventilation state accurately and earlier and to always satisfactorily maintain the ventilation state of the blast furnace. As a ventilation index representing a ventilation state of a blast furnace, a ventilation resistance calculated from, for example, a differential value between a furnace top pressure and a blowing pressure has been used. A threshold for ventilation deterioration determination is provided for a ventilation index such as a ventilation resistance and, when the ventilation index has exceeded the threshold, it is determined that ventilation deterioration has occurred. Patent Literature 1 describes a method of inputting a shaft pressure and calculating an evaluation index using a statistical method such as a principal component analysis to perform abnormality determination for a blast furnace. In the method described in Patent Literature 1, a ratio of a Q statistic calculated based on stability limit data and a Q statistic calculated based on operation data of an abnormality detection target is calculated as an evaluation index and a threshold is set for the evaluation index to perform the abnormality determination for the blast furnace.

### Citation List

### Patent Literature

Patent Literature 1: JP 2017-128805 A

### Summary

### Technical Problem

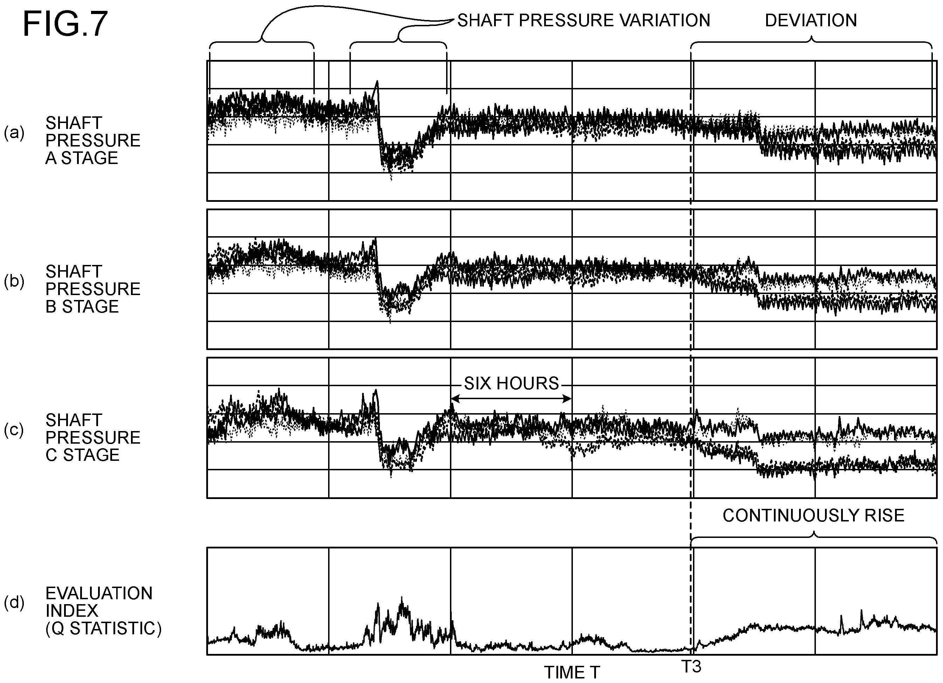

When the abnormality determination for the blast furnace has been performed using the method described in Patent Literature 1, the evaluation index sometimes continuously increases and continuously exceeds the threshold when a constant shaft pressure deviation has continuously occurred in the same stage (the same height position) of the blast furnace. This state often occurs when a pressure deviation continuously occurs at a specific position. Although this state can be regarded as somewhat abnormal, it is sometimes determined that measures may not be taken. It is undesirable to continuously determine this state as an abnormality. In particular, in a blast furnace having a large furnace volume, even if some pressure deviation occurs, influence on the operation is small. Therefore, the operation is often continued as it is. The some pressure deviation is sometimes not regarded as an abnormality. For example, in an example illustrated in FIG. 7, a temporally greatly changing variation occurs in a shaft pressure in a former half portion and a steady deviation occurs in the same stage of the shaft pressure in a latter half portion. In this case, since a sense of level of an evaluation index (a Q statistic) calculated based on the shaft pressure is the same in the former half portion and the latter half portion, the temporally greatly changing variation of the shaft pressure and the steady deviation cannot be distinguished to perform abnormality determination. When an abnormal state in which short-time temporal fluctuation of the shaft pressure increases has occurred when a deviation of the shaft pressure continuously occurs in a predetermined range, the evaluation index has already exceeded the threshold. Therefore, abnormality determination for the short-time temporal fluctuation cannot be performed.

The present invention has been made to solve the problems described above, and an object of the present invention is to provide a blast furnace abnormality determination device and an abnormality determination method capable of accurately determining an abnormality of a blast furnace. Another object of the present invention is to provide a blast furnace operation method, a blast furnace operation system, a blast furnace abnormality determination server device, a program for the blast furnace abnormality determination server device, and a display terminal device capable of stably operating a blast furnace.

### Solution to Problem

A blast furnace abnormality determination device according to a first aspect of the present invention includes: a sensor signal acquisition unit configured to acquire measurement data of a plurality of sensors installed at different positions of a blast furnace; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; and a determination unit configured to determine an abnormality of the blast furnace based on the evaluation index differential value calculated by the evaluation index differential value calculation unit and output a result of the determination and data used for the determination.

A blast furnace abnormality determination device according to a second aspect of the present invention includes: a sensor signal acquisition unit configured to acquire measurement data of a plurality of sensors installed at different positions of a blast furnace; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; an evaluation index difference integrated value calculation unit configured to calculate an evaluation index difference integrated value that is an integrated value in a predetermined time range of the evaluation index differential value calculated by the evaluation index differential value calculation unit; and a determination unit configured to determine an abnormality of the blast furnace based on the evaluation index difference integrated value calculated by the evaluation index difference integrated value calculation unit and output a result of the determination and data used for the determination.

The evaluation index calculation unit may be configured to calculate the evaluation index using a statistical learning model that outputs an evaluation index obtained by indexing the furnace condition state of the blast furnace based on measurement data of the sensors in a normal state of the blast furnace.

A blast furnace abnormality determination method according to the first aspect of the present invention includes: a sensor signal acquisition step of acquiring measurement data of a plurality of sensors installed at different positions of a blast furnace; an evaluation index calculation step of calculating a unified evaluation index indicating a furnace condition state of the blast furnace from the measurement data acquired in the sensor signal acquisition step; an evaluation index differential value calculation step of calculating an evaluation index differential value that is an absolute value of a time difference of the evaluation index calculated in the evaluation index calculation step; and a determination step of determining an abnormality of the blast furnace based on the evaluation index differential value calculated in the evaluation index differential value calculation step and outputting a result of the determination and data used for the determination.

A blast furnace abnormality determination method according to the second aspect of the present invention includes: a sensor signal acquisition step of acquiring measurement data of a plurality of sensors installed at different positions of a blast furnace; an evaluation index calculation step of calculating a unified evaluation index indicating a furnace condition state of the blast furnace from the measurement data acquired in the sensor signal acquisition step; an evaluation index differential value calculation step of calculating an evaluation index differential value that is an absolute value of a time difference of the evaluation index calculated in the evaluation index calculation step; an evaluation index difference integrated value calculation step of calculating an evaluation index difference integrated value that is an integrated value in a predetermined time range of the evaluation index differential value calculated in the evaluation index differential value calculation step; and a determination step of determining an abnormality of the blast furnace based on the evaluation index difference integrated value calculated in the evaluation index difference integrated value calculation step and outputting a result of the determination and data used for the determination.

The evaluation index calculation step may include a step of calculating the evaluation index using a statistical learning model that outputs an evaluation index obtained by indexing the furnace condition state of the blast furnace based on measurement data of the sensors in a normal state of the blast furnace.

A blast furnace operation method according to the present invention operates the blast furnace while determining whether the blast furnace is in an abnormal state using the blast furnace abnormality determination method according to the present invention.

A blast furnace operation system according to the first aspect of the present invention includes: a blast furnace abnormality determination device configured to determine an abnormality in a blast furnace; and a display device connected to the blast furnace abnormality determination device via a network and configured to display information output from the blast furnace abnormality determination device, wherein the blast furnace abnormality determination device includes: a sensor signal acquisition unit configured to acquire measurement data of a plurality of sensors installed at different positions of the blast furnace; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; and a determination unit configured to determine an abnormality of the blast furnace based on the evaluation index differential value calculated by the evaluation index differential value calculation unit and output a result of the determination and data used for the determination.

A blast furnace operation system according to the second aspect of the present invention includes: a blast furnace abnormality determination device configured to determine an abnormality in a blast furnace; and a display device connected to the blast furnace abnormality determination device via a network and configured to display information output from the blast furnace abnormality determination device, wherein the blast furnace abnormality determination device includes: a sensor signal acquisition unit configured to acquire measurement data of a plurality of sensors installed at different positions of the blast furnace; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; an evaluation index difference integrated value calculation unit configured to calculate an evaluation index difference integrated value that is an integrated value in a predetermined time range of the evaluation index differential value calculated by the evaluation index differential value calculation unit; and a determination unit configured to determine abnormality of the blast furnace based on the evaluation index difference integrated value calculated by the evaluation index difference integrated value calculation unit and output a result of the determination and data used for the determination.

A blast furnace abnormality determination server device according to the first aspect of the present invention for constructing a blast furnace operation system in conjunction with: a data collection device for acquiring measurement data from a sensor installed in a blast furnace and accumulating the measurement data; and a display terminal device for acquiring abnormality determination information from a blast furnace abnormality determination server device and displaying the abnormality determination information, includes: a sensor signal acquisition unit configured to acquire measurement data of a plurality of sensors installed at different positions of the blast furnace from the data collection device; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; a determination unit configured to determine an abnormality of the blast furnace based on the evaluation index differential value calculated by the evaluation index differential value calculation unit and output a result of the determination and data used for the determination; and a determination data transmission unit configured to transmit abnormality determination information including the result of the determination and the data used for the determination.

A blast furnace abnormality determination server device according to the second aspect of the present invention for constructing a blast furnace operation system in conjunction with: a data collection device for acquiring measurement data from a sensor installed in a blast furnace and accumulating the measurement data; and a display terminal device for acquiring abnormality determination information from a blast furnace abnormality determination server device and displaying the abnormality determination information, includes: a sensor signal acquisition unit configured to acquire measurement data of a plurality of sensors installed at different positions of the blast furnace from the data collection device; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; an evaluation index difference integrated value calculation unit configured to calculate an evaluation index difference integrated value that is an integrated value in a predetermined time range of the evaluation index differential value calculated by the evaluation index differential value calculation unit; a determination unit configured to determine abnormality of the blast furnace based on the evaluation index difference integrated value calculated by the evaluation index difference integrated value calculation unit and output a result of the determination and data used for the determination; and a determination data transmission unit configured to transmit abnormality determination information including the result of the determination and the data used for the determination.

A program according to the first aspect of the present invention for a blast furnace abnormality determination server device for constructing a blast furnace operation system in conjunction with a data collection device for acquiring measurement data from a sensor installed in a blast furnace and accumulating the measurement data and a display terminal device for acquiring abnormality determination information from a blast furnace abnormality determination server device and displaying the abnormality determination information, causes a computer to function as: a sensor signal acquisition unit configured to acquire measurement data of a plurality of sensors installed at different positions of the blast furnace from the data collection device; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; a determination unit configured to determine an abnormality of the blast furnace based on the evaluation index differential value calculated by the evaluation index differential value calculation unit and output a result of the determination and data used for the determination; and determination data transmission unit configured to transmit abnormality determination information including the result of the determination and the data used for the determination.

A program according to the second aspect of the present invention for a blast furnace abnormality determination server device for constructing a blast furnace operation system in conjunction with: a data collection device for acquiring measurement data from a sensor installed in a blast furnace and accumulating the measurement data; and a display terminal device for acquiring abnormality determination information from a blast furnace abnormality determination server device and displaying the abnormality determination information, causes a computer to function as: a sensor signal acquisition unit configured to acquire measurement data of a plurality of sensors installed at different positions of the blast furnace from the data collection device; an evaluation index calculation unit configured to calculate a unified evaluation index indicating a furnace condition state of the blast furnace from the measurement data acquired by the sensor signal acquisition unit; an evaluation index differential value calculation unit configured to calculate an evaluation index differential value that is an absolute value of a time difference of the evaluation index calculated by the evaluation index calculation unit; an evaluation index difference integrated value calculation unit configured to calculate an evaluation index difference integrated value that is an integrated value in a predetermined time range of the evaluation index differential value calculated by the evaluation index differential value calculation unit; a determination unit configured to determine abnormality of the blast furnace based on the evaluation index difference integrated value calculated by the evaluation index difference integrated value calculation unit and output a result of the determination and data used for the determination; and a determination data transmission unit configured to transmit abnormality determination information including the result of the determination and the data used for the determination.

A display terminal device according to the first aspect of the present invention for constructing a blast furnace operation system in conjunction with: a data collection device for acquiring measurement data from a sensor installed in a blast furnace and accumulating the measurement data; and a blast furnace abnormality determination server device including sensor signal acquisition unit configured to acquire measurement data of a plurality of sensors installed at different positions of the blast furnace from the data collection device, an evaluation index calculation unit configured to calculate a unified evaluation index indicating a furnace condition state of the blast furnace from the measurement data acquired by the sensor signal acquisition unit, an evaluation index differential value calculation unit configured to calculate an evaluation index differential value that is an absolute value of a time difference of the evaluation index calculated by the evaluation index calculation unit, a determination unit configured to determine an abnormality of the blast furnace based on the evaluation index differential value calculated by the evaluation index differential value calculation unit and output a result of the determination and data used for the determination, and a determination data transmission unit configured to transmit abnormality determination information including the result of the determination and the data used for the determination, is configured to acquire the abnormality determination information from the blast furnace abnormality determination server device via a network and display the abnormality determination information.

A display terminal device according to the second aspect of the present invention for constructing a blast furnace operation system in conjunction with: a data collection device for acquiring measurement data from a sensor installed in a blast furnace and accumulating the measurement data; and a blast furnace abnormality determination server device including a sensor signal acquisition unit configured to acquire measurement data of a plurality of sensors installed at different positions of the blast furnace from the data collection device, an evaluation index calculation unit configured to calculate a unified evaluation index indicating a furnace condition state of the blast furnace from the measurement data acquired by the sensor signal acquisition unit, an evaluation index differential value calculation unit configured to calculate an evaluation index differential value that is an absolute value of a time difference of the evaluation index calculated by the evaluation index calculation unit, an evaluation index difference integrated value calculation unit configured to calculate an evaluation index difference integrated value that is an integrated value in a predetermined time range of the evaluation index differential value calculated by the evaluation index differential value calculation unit, a determination unit configured to determine abnormality of the blast furnace based on the evaluation index difference integrated value calculated by the evaluation index difference integrated value calculation unit and output a result of the determination and data used for the determination, and a determination data transmission unit configured to transmit abnormality determination information including the result of the determination and the data used for the determination, is configured to acquire the abnormality determination information from the blast furnace abnormality determination server device via a network and display the abnormality determination information.

### Advantageous Effects of Invention

With the blast furnace abnormality determination device and the abnormality determination method according to the present invention, it is possible to accurately determine an abnormality of the blast furnace. With the blast furnace operation method, the blast furnace operation system, the blast furnace abnormality determination server device, the program for the blast furnace abnormality determination server device, and the display terminal device according to the present invention, it is possible to stably operate the blast furnace.

### Brief Description of Drawings

FIG. 1 is a block diagram illustrating a configuration of a blast furnace abnormality determination device according to an embodiment of the present invention.
FIG. 2 is a block diagram illustrating a configuration of a modification of the blast furnace abnormality determination device illustrated in FIG. 1.
FIG. 3 is a block diagram illustrating a configuration of a modification of the blast furnace abnormality determination device illustrated in FIG. 1.
FIG. 4 is a diagram illustrating disposition positions of shaft pressure gauges in an example.
FIG. 5 is a diagram illustrating temporal changes of a shaft pressure and an evaluation index in an example.
FIG. 6 is a diagram illustrating temporal changes of a shaft pressure and an evaluation index in an example.
FIG. 7 is a diagram illustrating temporal changes of a shaft pressure and an evaluation index in the related art. Description of Embodiment

A blast furnace abnormality determination device according to an embodiment of the present invention is explained.

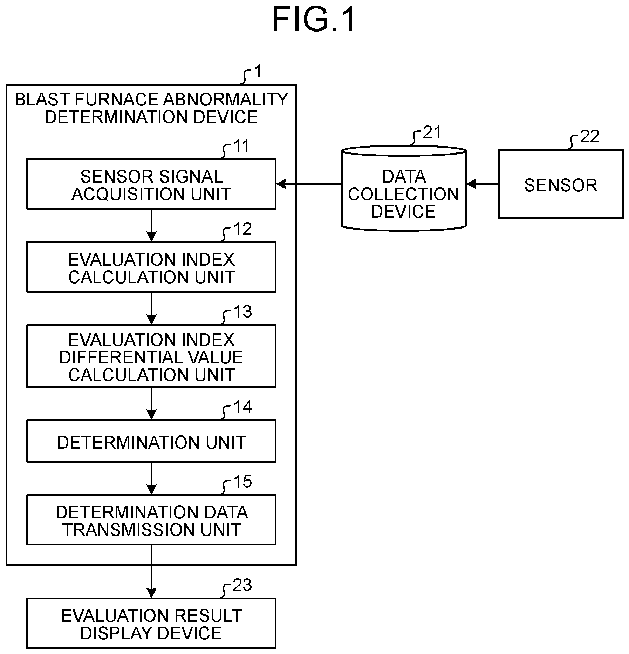

FIG. 1 is a block diagram illustrating a configuration of the blast furnace abnormality determination device according to the embodiment of the present invention. As illustrated in FIG. 1, a blast furnace abnormality determination device 1 according to the embodiment of the present invention includes an information processing device such as a general-purpose personal computer or a dedicated computer. When an arithmetic processing device inside the information processing device executes a computer program, whereby the blast furnace abnormality determination device 1 functions as a sensor signal acquisition unit 11, an evaluation index calculation unit 12, an evaluation index differential value calculation unit 13, a determination unit 14, and a determination data transmission unit 15.

The sensor signal acquisition unit 11 acquires various data indicating a furnace condition state of a blast furnace detected by a sensor 22 and accumulated in a data collection device 21. The data collection device 21 includes a storage device such as a database. The sensor 22 is installed at a different plurality of positions of the blast furnace and detects various data indicating the furnace condition state of the blast furnace. As the sensor 22, a pressure sensor group that detects a shaft pressure of the blast furnace can be exemplified. In this case, the pressure sensor group is installed at a plurality of positions in the height direction and the circumferential direction of the blast furnace. A method of installing the pressure sensor group and the number of installed pressure sensors are different depending on a blast furnace. However, in many cases, pressure sensors are installed at approximately four to eight points at substantially equal intervals in the circumferential direction and are installed at approximately six to twelve points in the height direction from a lower part of the blast furnace to the vicinity of the upper surface of a raw material.

The evaluation index calculation unit 12 calculates an evaluation index concerning a furnace condition of the blast furnace using various data indicating the furnace condition state of the blast furnace acquired by the sensor signal acquisition unit 11. A method of calculating the evaluation index is not particularly limited and only has to be a method of unifying a plurality of data indicating the furnace condition state of the blast furnace into an evaluation index. The evaluation index calculation unit 12 may calculate an evaluation index of the blast furnace using, for example, the method described in Patent Literature 1. The evaluation index calculation unit 12 may, for example, divide an evaluation index calculated from determination target data by an evaluation index calculated from a data group set as a stability limit value and perform processing (standardization) such that the evaluation index is converted to an evaluation index, i.e., 1 at the stability limit for the evaluation index. Alternatively, as another method, an autoencoder by a neural network can also be presented as an example of neural network utilization. The evaluation index calculation unit 12 may evaluate the magnitude of a signal of the difference between an output of the auto encoder learned by data at a normal time and input data (a plurality of signals may be evaluated by vectors), determine the stability limit value, and then calculate an evaluation index during operation in the same manner as explained above.

In the present embodiment, an example in which a Q statistic is used as the evaluation index is explained. The Q statistic is calculated by a principal component analysis. The principal component analysis is mathematical processing of replacing (reducing the dimension of) a synchronizing plurality of (multidimensional) data groups with a small number of variables in which characteristics of original data are well reflected while reducing a loss of an information amount of an original data group as much as possible. In the case of data of a shaft pressure of the blast furnace, many pressure sensors are installed for one blast furnace as explained above. Here, it is assumed that pressure sensors are installed at thirty points. Therefore, if the principal component analysis is applied and a data group of thirty points are replaced with several variables (principal component values) satisfactorily reflecting characteristics of the data group of the thirty points, it is possible to easily estimate a furnace condition state of the blast furnace by monitoring a small number of variables generated by the principal component analysis without observing all of the data group of the thirty points. However, although the Q statistic is used as the evaluation index in the present embodiment, evaluation indexing by an independent component analysis or evaluation indexing using a machine learning method may be used.

In the data of the shaft pressure of the blast furnace, a component of a synchronized movement of shaft pressures at stable operation time of the blast furnace appears in a first principal component value having the largest dispersion in the principal component analysis. On the other hand, components in other than the stable period appear after second and subsequent component values of the principal component analysis. The present device performs abnormality detection using these components. A synchronization unit that there is cooperativity in behaviors of variables in operation with respect to temporal transitions or operational actions in a process. In the present embodiment, the principal component analysis is applied to the data of the sensor 2 at times, a second principal component value having the largest dispersion value in a component in which asynchrony of the data appears is calculated and this value is set as the Q statistic. However, when an abnormal phenomenon appears greatly in third and subsequent component values, the values may be used.

In the present embodiment, first, in a normal operation section not determined as abnormal, the principal component analysis is applied to the time-series data of the data of the sensor 2 and time-series data of a second principal component of the data is created. In the normal operation section not determined as abnormal, data of a stability limit, that is, a limit that can be determined as normal needs to be included. Next, a maximum value of the time-series data of the second principal component is calculated. To calculate the maximum value of the second principal component in the normal time section is to calculate a maximum value of a fluctuation width of the data of the sensor 2 and a deviation amount from a normal operation range in the case in which the normal operation is performed, that is, a value of the stability limit. When an operational abnormality in the blast furnace is detected, abnormality detection for the blast furnace is performed using, as an evaluation index, an index obtained by dividing a second principal component calculated from data of the sensor 2 in an operational range in which an abnormality is occurring by a maximum value of the second principal component calculated from data of the sensor 2 in the normal operational range.

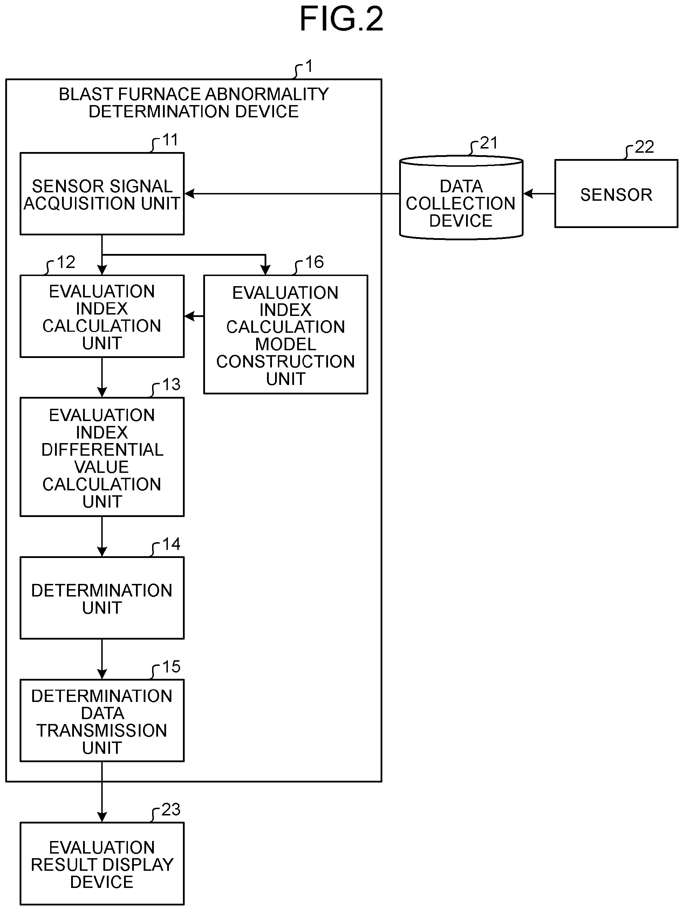

In the present embodiment, as explained above, a calculation formula for calculating the second principal component using the result of the principal component analysis performed based on the data acquired at the normal time is determined. In addition, an evaluation index calculation model for calculating a unified evaluation index indicating a furnace condition state of the blast furnace from a plurality of measurement data is constructed in advance using the calculation formula for calculating the second principal component and the maximum value of the second principal component, and the evaluation index is calculated. The construction of the evaluation index calculation model used for the calculation of the evaluation index only has to be implemented using a computer such as an analysis personal computer based on data accumulated in the data collection device 21. Alternatively, as illustrated in FIG. 2, an analysis tool may be installed in the blast furnace abnormality determination device 1 and an evaluation index calculation model construction unit 16 may be provided to implement the construction of the evaluation index calculation model.

FIG. 1 is referred to again. The evaluation index differential value calculation unit 13 calculates the absolute value of a change amount (an evaluation index time differential value) in a first predetermined time range for the evaluation index calculated by the evaluation index calculation unit 12. The first predetermined time is set in advance using, for example, an actual value of the absolute value at an abnormality occurrence time. Then, the evaluation index differential value calculation unit 13 outputs the calculated absolute value of the evaluation index time differential value to the determination unit 14.

The determination unit 14 determines whether an abnormality has occurred in the blast furnace by discriminating whether the absolute value of the evaluation index time differential value output from the evaluation index differential value calculation unit 13 is, for example, a first predetermined threshold or more. Then, the determination unit 14 outputs information indicating a determination result and related data (sensor data, an evaluation index value, the absolute value of the evaluation index time differential value, and the like) serving as a basis of the determination.

The determination data transmission unit 15 transmits abnormality determination information including a result the determination by the determination unit 14 and data used for the determination to an evaluation result display device 23. The evaluation result display device 23 includes a display device such as a liquid crystal display and acquires and displays the abnormality determination information transmitted from the determination data transmission unit 15. When information indicating that an abnormality has occurred in the blast furnace is displayed on the evaluation result display device 23, an operator takes measures such as a wind-reducing operation. The blast furnace abnormality determination device 1 and the evaluation result display device 3 may be connected via a network, whereby the evaluation result display device 23 may construct a client-server system that acquires and displays the information transmitted from the determination data transmission unit 15 via the network. Examples of the network include a telecommunication line such as the Internet, a telephone communication network such as a mobile phone, and a wireless communication network such as WiFi (registered trademark). In this case, the blast furnace abnormality determination device 1 functions as the blast furnace abnormality determination server device according to the present invention and the evaluation result display device 23 functions as the display terminal device according to the present invention.

Accordingly, when the steady deviation of the shaft pressure is not regarded as great operation deterioration, it is possible to reduce the influence of the steady deviation of the shaft pressure and accurately detect temporal fluctuation in a short time that is affected and buried by the influence of the steady deviation. Then, it is possible to detect an abnormality of the blast furnace accurately and at an early stage and stably operate the blast furnace without requiring much labor.

### [Modification]

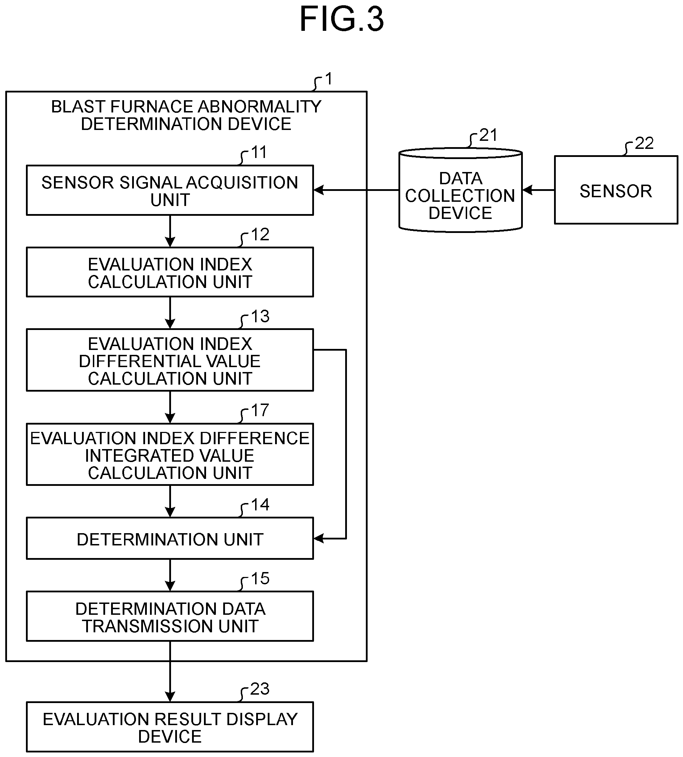

FIG. 3 is a block diagram illustrating a configuration of a modification of the blast furnace abnormality determination device 1 illustrated in FIG. 1. The blast furnace abnormality determination device 1 illustrated in FIG. 3 has a configuration in which an evaluation index difference integrated value calculation unit 17 is added to the blast furnace abnormality determination device 1 illustrated in FIG. 1. Functions of the sensor signal acquisition unit 11, the evaluation index calculation unit 12, and the evaluation index differential value calculation unit 13 illustrated in FIG. 3 are the same as the functions of the sensor signal acquisition unit 11, the evaluation index calculation unit 12, and the evaluation index differential value calculation unit 13 illustrated in FIG. 1. In the following explanation, functions of the evaluation index difference integrated value calculation unit 17, the determination unit 14, the determination data transmission unit 15, and the evaluation result display device 23 are explained.

The evaluation index difference integrated value calculation unit 17 calculates an integrated value in a second predetermined time range for the absolute value of an evaluation index time differential value calculated by the evaluation index differential value calculation unit 13. The second predetermined time is set in advance using, for example, an actual value of an integrated value at an abnormality occurrence time. Then, the evaluation index difference integrated value calculation unit 17 outputs the calculated integrated value to the determination unit 14.

The determination unit 14 determines whether an abnormality has occurred in the blast furnace by determining whether the integrated value output from the evaluation index difference integrated value calculation unit 17 is, for example, a second predetermined threshold or more. Then, the determination unit 14 outputs information indicating a determination result and related data (sensor data, an evaluation index value, the absolute value of the evaluation index time differential value, an absolute value integrated value of the evaluation index time differential value, and the like) serving as a basis of the determination. The determination data transmission unit 15 transmits abnormality determination information including a result the determination by the determination unit 14 and data used for the determination to an evaluation result display device 23.

The evaluation result display device 23 includes a display device such as a liquid crystal display and acquires and displays the information transmitted from the determination data transmission unit 15. When information indicating that an abnormality has occurred in the blast furnace is displayed on the evaluation result display device 8, the operator takes measures such as wind-reducing operation. Accordingly, when steady deviation of a shaft pressure is not regarded as great operation deterioration, the influence of the steady deviation of the shaft pressure is reduced, temporal variation in a short time influenced and buried by the steady deviation is accurately detected, and abnormality detection accuracy in the case in which short time fluctuation continues is improved. Therefore, it is possible to detect an abnormality of the blast furnace accurately and at an early stage and stably operate the blast furnace without requiring much labor. The blast furnace abnormality determination device 1 and the evaluation result display device 3 may be connected via a network, whereby the evaluation result display device 23 may construct a client-server system that acquires and displays the information transmitted from the determination data transmission unit 15 via the network. Examples of the network include a telecommunication line such as the Internet, a telephone communication network such as a mobile phone, and a wireless communication network such as WiFi (registered trademark). In this case, the blast furnace abnormality determination device 1 functions as the blast furnace abnormality determination server device according to the present invention and the evaluation result display device 23 functions as the display terminal device according to the present invention.

### [Examples]

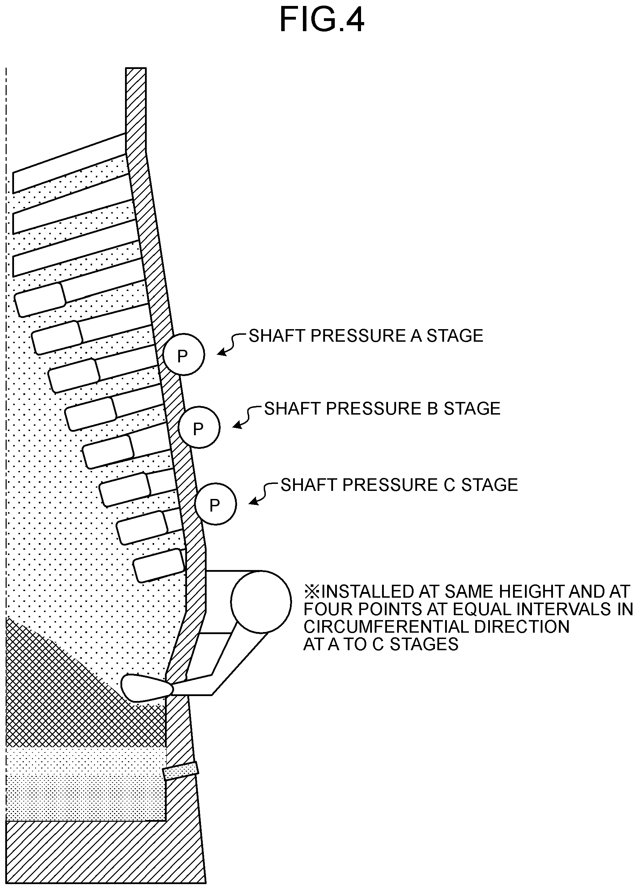

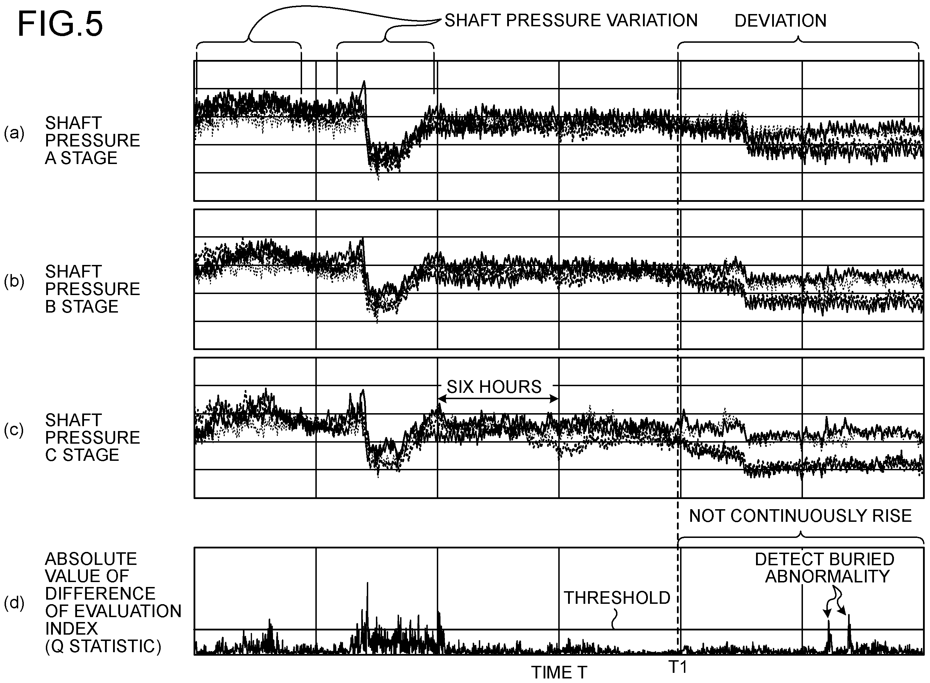

In the present example, as illustrated in FIG. 4, shaft pressure gauges were disposed in three stages (an A stage, a B stage, and a C stage from the top) in the blast furnace up-down direction of a furnace body and four shaft pressure gauges were disposed at equal intervals in the circumferential direction in the stages. First, it was determined by the evaluation index differential value calculation unit 13 whether an abnormality occurred in the blast furnace. FIG. 5 illustrates a determination result. In an example illustrated in FIG. 5, the absolute value of a time differential value of an evaluation index was calculated with the first predetermined time set to five minutes. As the first predetermined time that is the differential time, an optimum time only has to be selected by taking time differences of a plurality of patterns and comparing the time differences. However, a suitable range was approximately three to 10 minutes. Data used for the calculation is the same as the data illustrated in FIG. 7. As illustrated in FIG. 5, since the evaluation index does not continuously rise and does not continuously exceed a threshold even in a time period in which there is a steady deviation at the same stage occurring in a latter half of time, it is not determined that an abnormality continuously occurs in the blast furnace. In an example illustrated in FIG. 7, it is possible to detect short-time temporal fluctuation that is unclear because the evaluation index continuously increases because of the influence of the steady deviation. As explained above, it is seen that the above is a useful method for improving the accuracy of abnormality diagnosis in the case in which the steady deviation of the shaft pressure is not regarded as great operation deterioration.

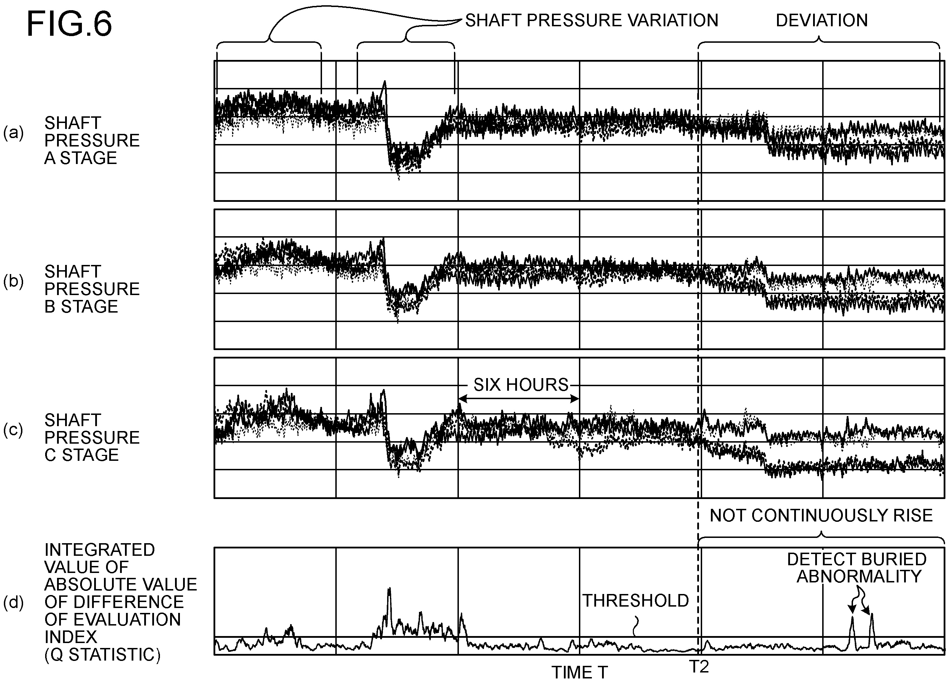

Subsequently, it was determined by the evaluation index difference integrated value calculation unit 17 whether an abnormality occurred in the blast furnace. FIG. 6 illustrates a determination result. In an example illustrated in FIG. 6, the absolute value of a time differential value of the evaluation index was calculated with the first predetermined time set to five minutes and an integrated value of the absolute values was calculated with the second predetermined time set to 10 minutes. The second predetermined time is also desirably determined by examining actual data. However, in the case of blast furnace operation data used this time, it was suitable to determine the second predetermined time in a range of five minutes to 20 minutes and more preferably in a range of 10 minutes to 15 minutes. Therefore, here, it was determined that an integration time of 10 minutes was appropriate from the viewpoint of detection accuracy. Since the second predetermined time is also affected by the differential time explained above, it is preferable to determine the second predetermined time considering the differential time as well. As illustrated in FIG. 6, in addition to the same effect as the example illustrated in FIG. 5 being obtained, noisy up-down fluctuation of the evaluation index is suppressed as compared with the example illustrated in FIG. 5. Accordingly, the evaluation index continuously exceeds the threshold in at abnormal state. At an abnormal state time, it is possible to continuously present the abnormal state.

The embodiment to which the invention made by the present inventors is applied is explained above. However, the present invention is not limited by the description and the drawings forming a part of the disclosure of the present invention by the present embodiment. That is, all of other embodiments, examples, operation techniques, and the like made by those skilled in the art and the like based on the present embodiment are included in the scope of the present invention.

### Industrial Applicability

According to the present invention, it is possible to provide a blast furnace abnormality determination device and an abnormality determination method capable of accurately determining an abnormality of a blast furnace. According to the present invention, it is possible to provide a blast furnace operation method, an operation system, a blast furnace abnormality determination server device, a program for the blast furnace abnormality determination server device, and a display terminal device capable of stably operating a blast furnace.

### Reference Signs List

1 BLAST FURNACE ABNORMALITY DETERMINATION DEVICE
11 SENSOR SIGNAL ACQUISITION UNIT
12 EVALUATION INDEX CALCULATION UNIT
13 EVALUATION INDEX DIFFERENTIAL VALUE CALCULATION UNIT
14 DETERMINATION UNIT
15 DETERMINATION DATA TRANSMISSION UNIT
16 EVALUATION INDEX CALCULATION MODEL CONSTRUCTION UNIT
17 EVALUATION INDEX DIFFERENCE INTEGRATED VALUE CALCULATION UNIT
21 DATA COLLECTION DEVICE
22 SENSOR

## Claims

1. A blast furnace abnormality determination device comprising:
a sensor signal acquisition unit configured to acquire measurement data of a plurality of sensors installed at different positions of a blast furnace;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit; and
a determination unit configured to determine an abnormality of the blast furnace based on the evaluation index differential value calculated by the evaluation index differential value calculation unit and output a result of the determination and data used for the determination.

2. A blast furnace abnormality determination device comprising:
a sensor signal acquisition unit configured to acquire measurement data of a plurality of sensors installed at different positions of a blast furnace;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit;
an evaluation index difference integrated value calculation unit configured to calculate an evaluation index difference integrated value that is an integrated value in a predetermined time range of the evaluation index differential value calculated by the evaluation index differential value calculation unit; and
a determination unit configured to determine an abnormality of the blast furnace based on the evaluation index difference integrated value calculated by the evaluation index difference integrated value calculation unit and output a result of the determination and data used for the determination.

3. The blast furnace abnormality determination device according to claim 1 or 2, wherein the evaluation index calculation unit is configured to calculate the evaluation index using a statistical learning model that outputs an evaluation index obtained by indexing the furnace condition state of the blast furnace based on measurement data of the sensors in a normal state of the blast furnace.

4. A blast furnace abnormality determination method comprising:
a sensor signal acquisition step of acquiring measurement data of a plurality of sensors installed at different positions of a blast furnace;
an evaluation index calculation step of calculating a unified evaluation index indicating a furnace condition state of the blast furnace from the measurement data acquired in the sensor signal acquisition step;
an evaluation index differential value calculation step of calculating an evaluation index differential value that is an absolute value of a time difference of the evaluation index calculated in the evaluation index calculation step; and
a determination step of determining an abnormality of the blast furnace based on the evaluation index differential value calculated in the evaluation index differential value calculation step and outputting a result of the determination and data used for the determination.

5. A blast furnace abnormality determination method comprising:
a sensor signal acquisition step of acquiring measurement data of a plurality of sensors installed at different positions of a blast furnace;
an evaluation index calculation step of calculating a unified evaluation index indicating a furnace condition state of the blast furnace from the measurement data acquired in the sensor signal acquisition step;
an evaluation index differential value calculation step of calculating an evaluation index differential value that is an absolute value of a time difference of the evaluation index calculated in the evaluation index calculation step;
an evaluation index difference integrated value calculation step of calculating an evaluation index difference integrated value that is an integrated value in a predetermined time range of the evaluation index differential value calculated in the evaluation index differential value calculation step; and
a determination step of determining an abnormality of the blast furnace based on the evaluation index difference integrated value calculated in the evaluation index difference integrated value calculation step and outputting a result of the determination and data used for the determination.

6. The blast furnace abnormality determination method according to claim 4 or 5, wherein the evaluation index calculation step includes a step of calculating the evaluation index using a statistical learning model that outputs an evaluation index obtained by indexing the furnace condition state of the blast furnace based on measurement data of the sensors in a normal state of the blast furnace.

7. A blast furnace operation method for operating the blast furnace while determining whether the blast furnace is in an abnormal state using the blast furnace abnormality determination method according to any one of claims 4 to 6.

8. A blast furnace operation system comprising:
a blast furnace abnormality determination device configured to determine an abnormality in a blast furnace; and
a display device connected to the blast furnace abnormality determination device via a network and configured to display information output from the blast furnace abnormality determination device, wherein
the blast furnace abnormality determination device includes:
a sensor signal acquisition unit configured to acquire measurement data of a plurality of sensors installed at different positions of the blast furnace;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit; and
a determination unit configured to determine an abnormality of the blast furnace based on the evaluation index differential value calculated by the evaluation index differential value calculation unit and output a result of the determination and data used for the determination.

9. A blast furnace abnormality determination server device for constructing a blast furnace operation system in conjunction with: a data collection device for acquiring measurement data from a sensor installed in a blast furnace and accumulating the measurement data; and a display terminal device for acquiring abnormality determination information from a blast furnace abnormality determination server device and displaying the abnormality determination information, the blast furnace abnormality determination server device comprising:
a sensor signal acquisition unit configured to acquire measurement data of a plurality of sensors installed at different positions of the blast furnace from the data collection device;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit;
a determination unit configured to determine an abnormality of the blast furnace based on the evaluation index differential value calculated by the evaluation index differential value calculation unit and output a result of the determination and data used for the determination; and
a determination data transmission unit configured to transmit abnormality determination information including the result of the determination and the data used for the determination.

10. A program for a blast furnace abnormality determination server device for constructing a blast furnace operation system in conjunction with a data collection device for acquiring measurement data from a sensor installed in a blast furnace and accumulating the measurement data and a display terminal device for acquiring abnormality determination information from a blast furnace abnormality determination server device and displaying the abnormality determination information, the program causing a computer to function as:
a sensor signal acquisition unit configured to acquire measurement data of a plurality of sensors installed at different positions of the blast furnace from the data collection device;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit;
a determination unit configured to determine an abnormality of the blast furnace based on the evaluation index differential value calculated by the evaluation index differential value calculation unit and output a result of the determination and data used for the determination; and
determination data transmission unit configured to transmit abnormality determination information including the result of the determination and the data used for the determination.

11. A display terminal device for constructing a blast furnace operation system in conjunction with: a data collection device for acquiring measurement data from a sensor installed in a blast furnace and accumulating the measurement data; and a blast furnace abnormality determination server device including sensor signal acquisition unit configured to acquire measurement data of a plurality of sensors installed at different positions of the blast furnace from the data collection device, an evaluation index calculation unit configured to calculate a unified evaluation index indicating a furnace condition state of the blast furnace from the measurement data acquired by the sensor signal acquisition unit, an evaluation index differential value calculation unit configured to calculate an evaluation index differential value that is an absolute value of a time difference of the evaluation index calculated by the evaluation index calculation unit, a determination unit configured to determine an abnormality of the blast furnace based on the evaluation index differential value calculated by the evaluation index differential value calculation unit and output a result of the determination and data used for the determination, and a determination data transmission unit configured to transmit abnormality determination information including the result of the determination and the data used for the determination, wherein
the display terminal device is configured to
acquire the abnormality determination information from the blast furnace abnormality determination server device via a network and
display the abnormality determination information.

12. A blast furnace operation system comprising:
a blast furnace abnormality determination device configured to determine an abnormality in a blast furnace; and
a display device connected to the blast furnace abnormality determination device via a network and configured to display information output from the blast furnace abnormality determination device, wherein
the blast furnace abnormality determination device includes:
a sensor signal acquisition unit configured to acquire measurement data of a plurality of sensors installed at different positions of the blast furnace;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit;
an evaluation index difference integrated value calculation unit configured to calculate an evaluation index difference integrated value that is an integrated value in a predetermined time range of the evaluation index differential value calculated by the evaluation index differential value calculation unit; and
a determination unit configured to determine abnormality of the blast furnace based on the evaluation index difference integrated value calculated by the evaluation index difference integrated value calculation unit and output a result of the determination and data used for the determination.

13. A blast furnace abnormality determination server device for constructing a blast furnace operation system in conjunction with: a data collection device for acquiring measurement data from a sensor installed in a blast furnace and accumulating the measurement data; and a display terminal device for acquiring abnormality determination information from a blast furnace abnormality determination server device and displaying the abnormality determination information, the blast furnace abnormality determination server device comprising:
a sensor signal acquisition unit configured to acquire measurement data of a plurality of sensors installed at different positions of the blast furnace from the data collection device;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit;
an evaluation index difference integrated value calculation unit configured to calculate an evaluation index difference integrated value that is an integrated value in a predetermined time range of the evaluation index differential value calculated by the evaluation index differential value calculation unit;
a determination unit configured to determine abnormality of the blast furnace based on the evaluation index difference integrated value calculated by the evaluation index difference integrated value calculation unit and output a result of the determination and data used for the determination; and
a determination data transmission unit configured to transmit abnormality determination information including the result of the determination and the data used for the determination.

14. A program for a blast furnace abnormality determination server device for constructing a blast furnace operation system in conjunction with: a data collection device for acquiring measurement data from a sensor installed in a blast furnace and accumulating the measurement data; and a display terminal device for acquiring abnormality determination information from a blast furnace abnormality determination server device and displaying the abnormality determination information, the program causing a computer to function as:
a sensor signal acquisition unit configured to acquire measurement data of a plurality of sensors installed at different positions of the blast furnace from the data collection device;
an evaluation index calculation unit configured to calculate a unified evaluation index indicating a furnace condition state of the blast furnace from the measurement data acquired by the sensor signal acquisition unit;
an evaluation index differential value calculation unit configured to calculate an evaluation index differential value that is an absolute value of a time difference of the evaluation index calculated by the evaluation index calculation unit;
an evaluation index difference integrated value calculation unit configured to calculate an evaluation index difference integrated value that is an integrated value in a predetermined time range of the evaluation index differential value calculated by the evaluation index differential value calculation unit;
a determination unit configured to determine abnormality of the blast furnace based on the evaluation index difference integrated value calculated by the evaluation index difference integrated value calculation unit and output a result of the determination and data used for the determination; and
a determination data transmission unit configured to transmit abnormality determination information including the result of the determination and the data used for the determination.

15. A display terminal device for constructing a blast furnace operation system in conjunction with: a data collection device for acquiring measurement data from a sensor installed in a blast furnace and accumulating the measurement data; and a blast furnace abnormality determination server device including a sensor signal acquisition unit configured to acquire measurement data of a plurality of sensors installed at different positions of the blast furnace from the data collection device, an evaluation index calculation unit configured to calculate a unified evaluation index indicating a furnace condition state of the blast furnace from the measurement data acquired by the sensor signal acquisition unit, an evaluation index differential value calculation unit configured to calculate an evaluation index differential value that is an absolute value of a time difference of the evaluation index calculated by the evaluation index calculation unit, an evaluation index difference integrated value calculation unit configured to calculate an evaluation index difference integrated value that is an integrated value in a predetermined time range of the evaluation index differential value calculated by the evaluation index differential value calculation unit, a determination unit configured to determine abnormality of the blast furnace based on the evaluation index difference integrated value calculated by the evaluation index difference integrated value calculation unit and output a result of the determination and data used for the determination, and a determination data transmission unit configured to transmit abnormality determination information including the result of the determination and the data used for the determination, wherein
the display terminal device is configured to
acquire the abnormality determination information from the blast furnace abnormality determination server device via a network and
display the abnormality determination information.
